# EUROPEAN PATENT SPECIFICATION

(11) **EP 0 363 371 B1**
(45) Date of publication and mention of the grant of the patent: **29.09.1993**
(21) Application number: 88902963.3
(22) Date of filing: 08.03.1988
(51) Int. Cl.: B01D 1/14, B01D 61/00, F24F 6/02

(54) **LIQUID EVAPORATING APPARATUS**
VORRICHTUNG ZUR VERDAMPFUNG VON FLÜSSIGKEITEN
APPAREILS D'EVAPORATION DE LIQUIDE

(30) Priority: 17.03.1987 SE 8701106
(43) Date of publication of application: 18.04.1990
(73) Proprietor: SÄÄSK, Aapo, S-175 41 Järfälla (SE)
(72) Inventor: SÄÄSK, Aapo, S-175 41 Järfälla (SE)
(74) Representative: Nilsson, Karl Ingvar
(86) International application number: SE8800110
(87) International publication number: WO8806912

(56) References cited:
- WO-A-86/00026
- CH-A- 623 914
- SE-B- 447 728
- US-A- 3 532 270

## Description

### TECHNICAL FIELD

The present invention relates to a liquid evaporating apparatus according to the preamble of claim 1 (Cfr. US-A-3 532 270).

### BACKGROUND PRIOR ART

An excessively low humidity in a room will create problems for the people, furniture fittings and production equipment present in the room. This problem is enhanced with more effective insulation of buildings. There are several known methods of increasing the humidity of air. According to one such known method air is brought into contact with the surface of water with the aid of an evaporator, therewith vaporizing the water. It is normal to heat the water and to increase the surface contact area of the water with the air, so as to increase vaporization.

One problem encountered with water evaporators is that the heating devices used (electrical resistors, piezo-electric elements and the like) tend to become coated with contaminants present in the water, e.g. calcium compounds. Another problem resides in the necessity of enlargening the contact surface between water and air. Irrespective of whether enlargement is effected by generating turbulence in the water or by dispersing the water in fine-droplet form, small water droplets are unavoidably entrained by the departing water vapour, therewith reducing the efficiency of the humidifier and engendering the risk that bacteria, lime etc. will accompany the droplets.

There are several known methods for cleansing liquids and for separating liquids at low temperatures close to atmospheric. These methods have been developed primarily for separating sea-water distillates, although they can, of course, be used in conjunction with other liquids. One simple example of such distillation processes is that effected by the sun, in which water is vaporized from a flat surface by heat from the sun and the subsequent water vapour is condensed on an air-cooled or a water-cooled surface located in the same room or in an adjacent room.

In accordance with another known method, designated "humidification-dehumidification", water vapour is carried away by a stream of air and is condensed by a more or less complicated process; c.f. for instance US-PS 4 350 570 and 4 383 703.

The aforesaid methods and conventional distillation processes require the provision of large vapour chambers, and hence the yield is low in relation to the necessary volumetric capacity of the apparatus used and the capital costs incurred.

In accordance with another known method of the aforementioned kind, designated membrane distillation, vapour is allowed to condense directly into a colder flow on the opposite side of a membrane which is placed adjacent an evaporation surface. Examples of this known method are found described in US-PS 3 340 186 and 4 476 024. The theoretical yields of these techniques (membrane distillation) and the yields actually obtained therewith in practice are recited in the article entitled Low Energy Cost Desalination Processes Using Hydrophobic Membranes and included in the Proceedings of the Second World Congress on Desalination and Water Re-use, November, 17-21, volume 3, pages 277-286.

A similar method which employs the use of a separate chamber for distillate between a membrane and a cooling flow is found described in US-A-3 563 870 and EP-A-0088315.

The yield obtained with systems employed in the aforementioned membrane distillation techniques is restricted by the fact that the presence of a flow on the condensation side of the membrane impedes the transportation of both air and heat through the membrane. The yield of such systems can be improved to some extent, by arranging a stationary air gap on the condensation side of the membrane, for example in accordance with Swedish Patent Specification 419699.

The object of the present invention is to provide an apparatus of the kind defined in the introduction which has a markedly higher efficiency than prior art apparatus of a similar kind.

### SUMMARY OF THE INVENTION

To achieve the above object, the liquid evaporating apparatus according to the invention is given the features set forth in the characterizing clause of claim 1.

These and other characteristic features of the inventive apparatus are set forth in the following claims.

### BRIEF DESCRIPTION OF THE DRAWINGS

The invention will now be described in more detail with reference to the accompanying schematic drawing, in which
Figure 1 illustrates an air humidifier, and
Figure 2 illustrates a liquid cleansing apparatus.

### DESCRIPTION OF PREFERRED EMBODIMENTS

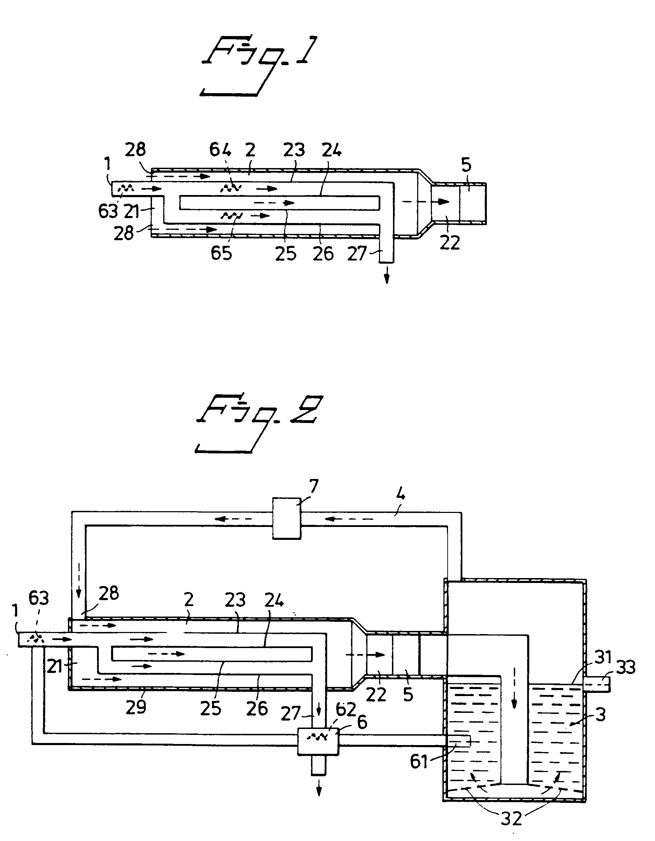

The air humidifier illustrated in Figure 1 includes a liquid (water) inlet 1 and an evaporator 2, the input side 21 of which is connected to the inlet 1 and which includes liquid-restraining wales 23, 24, 25, 26 which are made of a vapour-permeable, hydrophobic material and which restrain spreading of the liquid, as indicated by the arrows shown in full lines.

Arranged adjacent the input side 21 of the evaporator is an inlet 28 through which gas flows into the evaporator, the gas in this case being air. Extending between the input side 21 and the output side 22 of the evaporator 2 are channels, shown in broken lines, which are defined in part by the liquid-restraining, vapour-permeable walls 23, 24, 25, 26. The humidifier is configured so that the air will circulate through the inlet 28 and carry vapour which has permeated through the walls 23, 24, 25, 26 of the evaporator out through the output side 22 of the evaporator and into the surrounding room or space.

Although the level of humidity can be adjusted manually, e.g. by adjusting the quantities of air and/or water used, it is preferred to effect these adjustments automatically with the aid of a humidity gauge and control devices which control automatically, e.g., the temperature to which the incoming water is heated through the intermediary of the illustrated heating elements 63, 64, 65. This can be achieved by coupling the conduit system 1-27 to the system normally used to heat the room or space served by the humidifier. Such systems will in themselves afford satisfactory automatic adjustment of humidity levels, since the extent to which the air need be moistened is proportional to the amount of heat delivered to the room or space.

In the case of domestic installations, the exemplifying humidifier may be placed vertically and water introduced through the conduit 27. This water will run slowly down through the evaporator 2, in the opposite direction to the full arrows, wherewith part of the water will vaporize and pass in vapor form through the permeable walls 23, 24, 25, 26 and be carried out by the circulating air into the room or space, in the same direction as that indicated by the broken arrows. Circulation can be achieved, in certain cases, through the action of natural forces, while in those cases where natural forces will not suffice a fan 5 may be mounted on the output side 5, in the illustrated manner.

Alternatively, the humidifier may be installed with the evaporator extending horizontally and forming part of a ventilation system.

The water vapour engendered by the described and illustrated humidifier will be completely free from bacteria and virus.

Figure 2 illustrates a further example of how the inventive concept can be applied. Thus, Figure 2 illustrates schematically a liquid cleansing apparatus which comprises an inlet 1 for the liquid (liquids) to be cleansed (separated), an evaporator 2, the input side 21 of which is connected to the inlet 1, a condensation chamber 3, which is connected to the output side 22 of the evaporator 2, and a closed loop 4 through which gas is conducted between the output side 22 and the input side 21 of the evaporator 2.

Extending between the input side 21 and the output side 22 of the evaporator 2 are first channels which conduct the liquid arriving through the inlet 1, e.g. contaminated water having a temperature of 40°C, and which are defined by respective walls 23-24, 25-26 made of a vapor-permeable and hydrophobic material. Thus, when the apparatus is in operation, the water will pass along the channels and part of the water will vaporize and pass in vapour form through the channel-defining walls 23-26, while the remainder of the water will be led away through an outlet 27 located on the output side 22 of the evaporator. Arranged on the input side 21 of the evaporator 2 is a gas inlet 28 together with second channels, e.g. channels 23-29, 26-29, for conducting the gas through the evaporator. These second channels are thus defined partially by the walls 23-26 and partially by the external wall 29 of the evaporator 2.

The loop 4 incorporates at a first location between the evaporator 2 and the chamber 3 a fan means 5 by means of which the vapour and gas mixture is transported to the condensing chamber 3, and at a second location downstream of the chamber 3 incorporates a pressure and temperature regulator 7. The vapour and gas mixture is thus transported by means of the fan 5 to the chamber 3, in which the vapour separates from the gas and the gas bubbles up through the water 31 and passes through the upper part of the conduit 4 for re-use in the system. The cleansed water departs from the chamber through a separate clean-water outlet 33.

The condensing chamber 3 comprises a vessel which contains cool distillate and in which the incoming vapour condenses. Arranged closely adjacent the bottom of the vessel is an hydrophobic membrane 32 through which the vapour and gas mixture passes.

The condensing chamber 3 and the evaporator outlet 27 are cooled with the aid of a heat pump 6 or some equivalent device and the heat recovered therewith (at 61 and 62 respectively) is used for heating the water entering through the inlet 1 (at 63).

It will be understood that many modifications can be made within the scope of the inventive concept. For example, the channels which conduct the incoming liquid and which together form a closed chamber having both an inlet and an outlet may have a rectangular, cylindrical or helical shape. As beforementioned, the apparatus may also be used to separate one liquid from another, in which case the liquid fed to the inlet 1 will have several liquid constituents. Furthermore, the pressure and temperature in the evaporator and in the condensing chamber respectively may be adjusted to values at which one liquid at a time is distilled from the "liquid" entering through the inlet 1.

The hydrophobic material used for the vapour-permeable walls may be a polytetrafluoroethylene having a pore size of five µm and a porosity of 95 %.

The temperature of the liquid will normally lie within the range of 70 to 80°, and the water pressure will be suitably atmospheric pressure. In order to prevent clogging of the membrane, the amount of water recovered is preferably maintained at 50 to 70 % by volume. The water may be heated by microwave energy, in many cases.

## Claims

1. A liquid evaporating apparatus comprising an evaporator (2) having:
a single gas chamber, provided with a gas inlet (28) and a gas outlet (22);
a liquid chamber provided with an inlet (1) for and adapted to contain an aqueous liquid to be evaporated, said chambers being separated from one another by a semipermeable membrane (23-26); and
means (5) for creating a gas flow through the gas chamber to entrain vapour which has permeated through said semipermeable material and to pass gas and entrained vapour out through said gas chamber outlet (22), **characterized** in that
the liquid chamber is formed by a plurality of liquid channels arranged in said single gas chamber,
wherein the liquid-retaining walls (23-26) of said channels are made of said vapour-permeable, hydrophobic membrane, and wherein the liquid chamber is provided with a liquid outlet (27) to allow liquid intended to be evaporated to pass along the channels and out through said liquid outlet.

2. Apparatus according to claim 1, intended for cleansing a liquid, **characterized** in that the gas chamber outlet (22) of the evaporator (2) is connected to a condensing chamber (3).

3. Apparatus according to claim 2, **characterized** by a closed gas loop (4) which is located between the inlet (28) and outlet (22) of the evaporator (2) and which incorporates fan means (5) for transporting gas mixed with vapour to the condensing chamber (3).

4. Apparatus according to claim 3, **characterized** in that the condensing chamber (3) contains a liquid bath (31) which consists of previously condensed vapour and which is in communication with the output side of the evaporator (2), such that vapour contained in the gas will condense upon contact with said bath in the chamber (3).

5. Apparatus according to claim 4, **characterized** by a vapour-permeable hydrophobic membrane arranged between the output side (22) of the evaporator (2) and the liquid bath (31).

6. Apparatus according to any of claims 2-5, **characterized** by a heat pump (6) or some equivalent device by means of which heat is transported from the condensing chamber (3) and a liquid outlet (27) on the output side (22) of the evaporator (2) in closed system to the liquid inlet (1) on the input side (21) of the evaporator (2).

## Patentansprüche

1. Vorrichtung zur Verdampfung von Flüssigkeiten, enthaltend einen Evaporator (2) mit:
einer einzigen Gaskammer, welche mit einem Gaseinlaß (28) und einem Gasauslaß (22) versehen ist;
einer Flüssigkeitskammer, welche mit einem Einlaß (1) für wässrige Flüssigkeit versehen ist und geeignet ist, eine wässrige Flüssigkeit zu enthalten, wobei diese Kammern durch eine semipermeable Membran (23-26) voneinander getrennt sind; und
Mitteln (5) zur Erzeugung eines Gasstroms durch die Gaskammer, um Dampf, welcher durch das semipermeable Material gedrungen ist, mitzureißen und um Gas und mitgerissenen Dampf durch den Gaskammerauslaß (22) hinauszuleiten,
**dadurch gekennzeichnet,**
daß die Flüssigkeitskammer durch eine Vielzahl von Flüssigkeitskanälen gebildet ist, welche in der einzigen Gaskammer angeordnet sind, worin die Flüssigkeit-stauenden Wände (23-26) der Kanäle aus der dampfdurchlässigen , hydrophoben Membran gemacht sind, und worin die Flüssigkeitskammer mit einem Flüssigkeitsauslaß (27) versehen ist, um Flüssigkeit, welche verdampfen soll, entlang den Kanälen und durch den Flüssigkeitsauslaß hinaus fließen zu lassen.

2. Vorrichtung nach Anspruch 1, vorgesehen zur Reinigung einer Flüssigkeit,
**dadurch gekennzeichnet,**
daß der Gaskammerauslaß (22) des Evaporators (2) mit einer Kondensationskammer (3) verbunden ist.

3. Vorrichtung nach Anspruch 2,
**gekennzeichnet durch**
eine geschlossene Gasschleife (4), welche zwischen dem Einlaß (28) und Auslaß (22) des Evaporators (2) angeordnet ist und welche Gebläsemittel (5) enthält, um Gas, welches mit Dampf vermischt ist, zur Kondensationskammer (3) zu transportieren.

4. Vorrichtung nach Anspruch 3,
**dadurch gekennzeichnet,**
daß die Kondensationskammer (3) ein Flüssigkeitsbad (31) enthält, welches aus vorher kondensiertem Dampf besteht und welches mit der Ausgangsseite des Evaporators (2) in Verbindung steht, so daß im Gas enthaltener Dampf bei Kontakt mit dem Bad in der Kammer (3) kondensiert.

5. Vorrichtung nach Anspruch 4,
**gekennzeichnet durch**
eine dampfdurchlässige hydrophobe Membran, welche zwischen der Ausgangsseite (22) des Evaporators (2) und dem Flüssigkeitsbad (31) angeordnet ist.

6. Vorrichtung nach einem der Ansprüche 2-5,
**gekennzeichnet durch**
eine Wärmepumpe (6) oder irgendeine äquivalente Vorrichtung, mittels welcher Wärme von der Kondensationskammer (3) und einem Flüssigkeitsauslaß (27) auf der Ausgangsseite (22) des Evaporators (2) im geschlossenen System zum Flüssigkeitseinlaß (1) auf der Eingangsseite (21) des Evaporators (2) transportiert wird.

## Revendications

1. Un appareil d'évaporation de liquide comprenant un évaporateur (2) comprenant:
- une chambre à gaz unique, munie d'une entrée de gaz (28) et d'une sortie de gaz (22);
- une chambre à liquide munie d'une entrée (1) pour un liquide aqueux à évaporer et adaptée pour contenir celui-ci, lesdites chambres étant séparées l'une de l'autre par une membrane semi-perméable (22 à 26); et
- des moyens (5) pour créer un écoulement de gaz à travers la chambre à gaz pour entraîner la vapeur qui a migré à travers ledit matériau semi-perméable et faire passer le gaz et la vapeur entraînés à travers ladite sortie de la chambre à gaz (22),
caractérisé en ce que la chambre à liquide est formée d'une pluralité de canaux à liquide disposés dans ladite chambre à gaz unique, en ce que les parois retenant le liquide (23 à 26) desdits canaux sont constituées par ladite membrane perméable à la vapeur et hydrophobe, et en ce que la chambre à liquide est munie d'une sortie de liquide (27) pour permettre au liquide que l'on veut évaporer, de passer le long des canaux et de sortir à travers ladite sortie de liquide.

2. Appareil selon la revendication 1, destiné à épurer un liquide caractérisé en ce que la sortie (22) de la chambre à gaz de l'évaporateur (2) est reliée à une chambre de condensation (3).

3. Appareil selon la revendication 2, caractérisé par une boucle de gaz fermée (4) qui est disposée entre l'entrée (28) et la sortie (22) de l'évaporateur (2) et qui comporte des moyens de soufflage (5) pour transporter le gaz mélangé à de la vapeur vers la chambre de condensation (3).

4. Appareil selon la revendication 3, caractérisé en ce que la chambre de condensation (3) contient un bain liquide (31) qui se compose de la vapeur condensée précédemment et qui communique avec le côté de sortie de l'évaporateur (2), de sorte que la vapeur contenue dans le gaz se condense par mise en contact avec ledit bain dans la chambre (3).

5. Appareil selon la revendication 4, caractérisé par une membrane hydrophobe perméable à la vapeur disposée entre le côté de sortie (22) de l'évaporateur (2) et le bain liquide (31).

6. Appareil selon l'une des revendications 2 à 5, caractérisé par une pompe à chaleur (6) ou un dispositif équivalent au moyen duquel la chaleur est transportée à partir de la chambre de condensation (3) et d'une sortie de liquide (27) du côté de sortie (22) de l'évaporateur (2), en circuit fermé vers l'entrée de liquide (1) du côté entrée (21) de l'évaporateur (2).
